# FASCICULE DE BREVET EUROPEEN

(11) **EP 0 540 409 B1**
(45) Date de publication et mention de la délivrance du brevet: **13.03.1996**
(21) Numéro de dépôt: 92402912.7
(22) Date de dépôt: 27.10.1992
(51) Int. Cl.: B65B 67/12, B25J 21/02

(54) **Dispositif de montage d'un sac sur un rond de boîte à gants**
Vorrichtung zum Montieren eines Beutels auf einem Rohrstutzen eines Handschuhkastens
Device for mounting a bag on a nozzle of a glove box

(30) Priorité: 29.10.1991 FR 9113325
(43) Date de publication de la demande: 05.05.1993
(73) Titulaire: COMMISSARIAT A L'ENERGIE ATOMIQUE, F-75015 Paris (FR)
(72) Inventeur: Loriot, Pierre, F-13770 Venelles (FR)
(74) Mandataire: Dubois-Chabert, Guy

(56) Documents cités:
- FR-A- 2 195 510
- FR-A- 2 500 355

## Description

La présente invention concerne un dispositif pour monter un sac neuf sur un support, tel qu'un orifice circulaire de boîte à gants, communément appelé "rond de gant", sans risque de rupture du confinement de la boîte à gants (B.A.G.).

L'invention peut s'appliquer au domaine médical ainsi qu'à de nombreux domaines industriels, dans lesquels il est nécessaire de remplacer un sac usagé par un sac vide, sans risquer d'endommager le sac usagé.

De façon plus particulière, la présente invention peut également s'appliquer au remplacement de gants dans une boîte à gants.

Afin d'être plus générale, la description qui va suivre sera illustrée par un exemple de remplacement d'un sac contaminé par un sac vide neuf, c'est-à-dire non-contaminé.

Il est connu et usuel, dans les milieux à risque de contamination, de monter et démonter des sacs respectivement neufs et usagés "à la main", en utilisant, pour conserver l'étanchéité entre les sacs et le support, un certain savoir-faire.

Ce procédé, entièrement manuel, consiste à enfiler à la main, de façon délicate, le bord du sac neuf au-dessus du bord du sac usagé disposé sur le support.

Par mesure de précision, on parlera généralement du jonc d'un sac plutôt que du bord d'un sac, le terme de jonc laissant entendre qu'il s'agit d'un bord circulaire, régulier et élastique.

Les sacs sont montés sur un support comportant une partie cylindrique dont la paroi interne est sensiblement lisse et dont la paroi externe comprend deux logements (gorges ou bourrelets) aptes à recevoir chacun un jonc de sac.

Dans la suite de la description, on prendra, comme exemple de support, un rond de gants.

En effet, selon le procédé connu, le sac usagé est maintenu sur le rond de gants et, plus précisément, à l'intérieur de la partie cylindrique du rond de gants, par retenue du jonc dans le premier logement, c'est-à-dire le logement le plus proche de la surface du rond de gants. Le jonc du sac neuf est donc enfilé sur le jonc du sac usagé et disposé dans le second logement. Pour assurer le maintien du sac neuf dans la position décrite ci-dessus, l'opérateur a auparavant entouré, par un ruban adhésif, le jonc dudit sac neuf. L'opérateur peut alors effectuer une traction sur le sac usagé pour retirer le jonc dudit sac hors du premier logement. Il peut alors retirer le ruban adhésif qui entoure le jonc du sac neuf et déplacer ledit jonc vers le premier logement.

Ce procédé, à priori simple, nécessite une certaine délicatesse et un certain savoir-faire de la part de l'opérateur pour ne pas rompre le confinement du sac usagé lors de l'enfilement du jonc du sac neuf sur le jonc du sac usagé.

De plus, le jonc étant élastique, certains opérateurs éprouvent des difficultés à tendre ledit jonc pour le positionner dans le second logement.

Le système FR-A-2 195 510 décrit un système de remplacement d'un sac (ou d'un gant) usagé, comportant un rond de gant sur lequel est monté le sac (ou le gant). Il comporte en outre une bague annulaire assurant le maintien du sac (ou du gant). Un tel système présente l'inconvénient de nécessiter une mise en place manuelle du sac (ou du gant), d'où une certaine délicatesse et un certain savoir-faire de la part de l'opérateur pour ne pas rompre le confinement du sac (ou du gant) usagé.

Afin de remédier à ces inconvénients, la présente invention propose un système permettant de positionner avec précision et facilité le sac neuf sur le rond de gants.

De façon plus précise, la présente invention propose un système de remplacement d'un contenant usagé monté autour d'un support creux par un contenant neuf, ledit support comportant un contour externe comprenant lui-même au moins deux logements assurant la retenue des bords des contenants, lesdits bords des contenants étant fixés autour du support à l'aide de moyens adhésifs de fixation, caractérisé en ce qu'il comporte, d'une part, une jante de montage autour de laquelle est monté provisoirement le contenant neuf et, d'autre part, un dispositif d'installation permettant l'installation du bord dudit contenant sur ladite jante de montage, ladite jante de montage étant apte à être positionnée autour du support creux de façon à permettre le transfert du bord du contenant neuf de la jante de montage vers le support creux.

Selon une première variante, la jante de montage comprend au moins trois butées situées sur une paroi interne de ladite jante, ces butées permettant un positionnement précis autour du support.

Selon une seconde variante, la jante de montage comprend une couronne située sur sa paroi interne pour un positionnement précis autour du support.

Avantageusement, le dispositif d'installation comprend une première plaque comportant une échancrure en forme de fer à cheval et une seconde plaque, fixée parallèlement à la première plaque et située, par rapport à ladite première plaque, à une distance sensiblement supérieure à l'épaisseur de la jante de montage pour permettre l'installation de ladite jante entre lesdites plaques.

Selon un mode de réalisation de l'invention, la première plaque est en matériau transparent pour permettre la visualisation de la jante de montage.

D'autres avantages et caractéristiques de l'invention ressortiront de la description qui va suivre, cette description étant donnée à titre illustratif, mais nullement limitatif, en référence aux dessins dans lesquels :
- la figure 1 représente schématiquement le système selon l'invention, à savoir la jante de montage et le dispositif d'installation du sac sur ladite jante ;
- la figure 2 représente une étape du procédé, à savoir la mise en place du jonc du sac neuf sur la jante de montage grâce au dispositif d'installation ;
- la figure 3 représente l'opération dans laquelle la jante est placée sur le rond de gants pour permettre l'installation du sac neuf en partie sur le sac usagé ; sur cette figure, un premier mode de réalisation de rond de gants a été représenté ;
- la figure 4 représente l'opération dans laquelle on retire le sac usagé ;
- la figure 5 représente l'étape finale du procédé, à savoir l'enroulement du ruban adhésif autour du jonc du sac neuf lorsque celui-ci est correctement placé dans le premier logement du rond de gants ;
- la figure 6 représente un autre mode de réalisation de rond de gants pour lequel l'invention peut être mise en oeuvre.

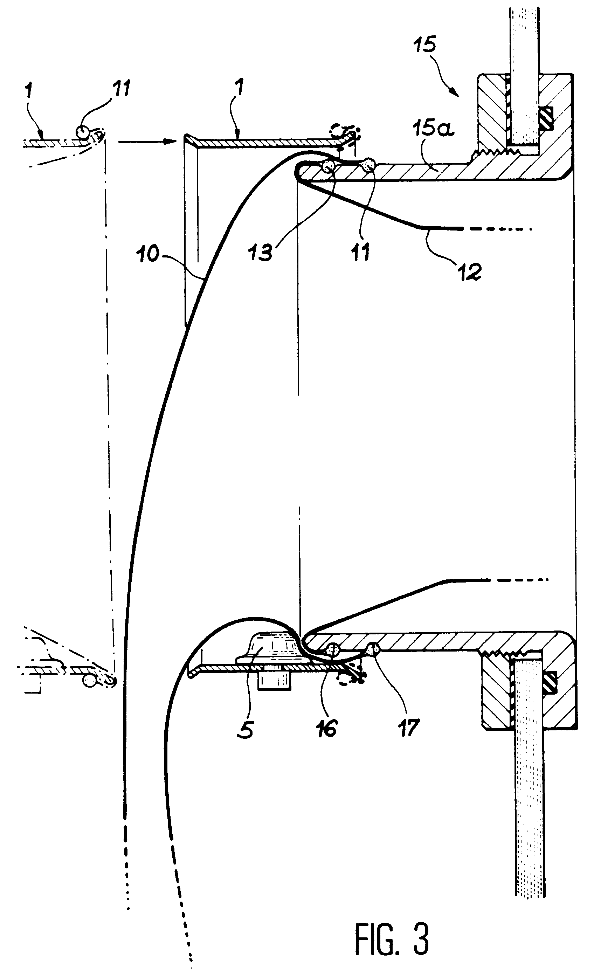

En effet, deux sortes de logements peuvent exister sur l'orifice du rond de gants, ce qui correspond à deux modes de réalisation du rond de gants. La première sorte, que l'on rencontrera sur les figures 3, 4 et 5, est une gorge réalisée dans la partie cylindrique du rond de gants ; la seconde sorte, un bourrelet, sera décrite lors de la description de la figure 6.

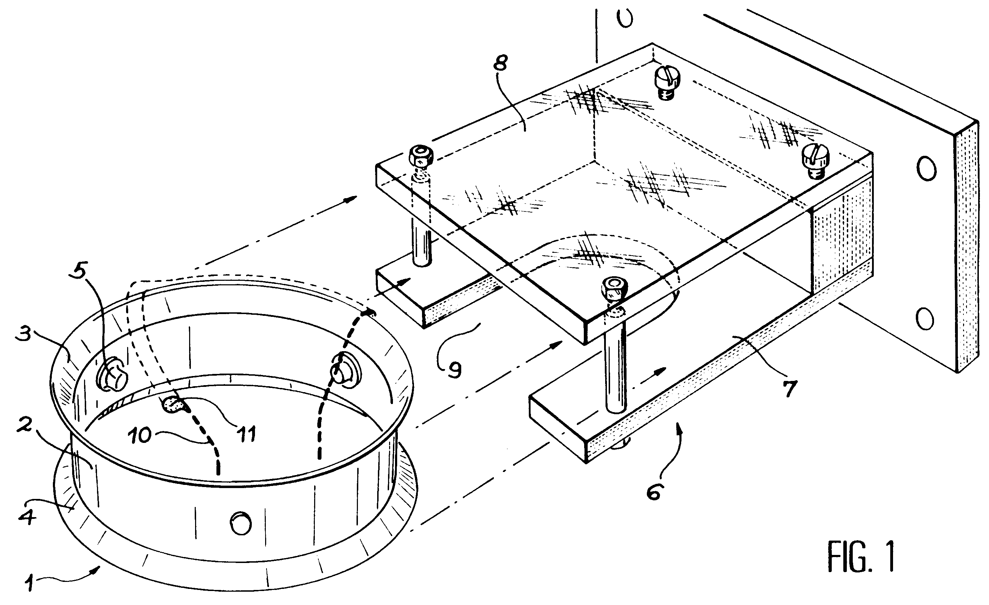

Aussi, durant la description des figures 1 à 5, on comprendra par première et seconde gorges, respectivement, les premier et second logements.

Sur la figure 1, on a représenté le système selon l'invention, c'est-à-dire le système permettant de faciliter le montage du sac neuf sur le rond de gants.

On peut voir, sur cette figure, la jante de montage 1 et le dispositif 6 d'installation du sac neuf sur ladite jante 1. La jante de montage 1 a la forme d'une jante de voiture, c'est-à-dire d'un cylindre 2 dont les extrémités 3 et 4 sont recourbées vers l'extérieur pour former des évasements. Cette jante 1 comprend, sur la paroi interne du cylindre 2, des butées 5 au moins au nombre de deux, réparties régulièrement sur ladite paroi. Ces butées permettent d'assurer un positionnement précis de la jante sur le rond de gants.

Pour un positionnement plus sûr, la jante 1 représentée sur la figure 1 comprend trois butées 5.

Sur cette figure, on a également représenté, en pointillés, le sac neuf 10 dont une partie du jonc 11 a été positionné autour de la jante, c'est-à-dire dans l'évasement 3 qui assure la retenue du jonc 11 autour de la jante 1.

Selon un mode de réalisation de la jante de montage 1, les butées 5 sont disposées au milieu du cylindre 2 afin de permettre une symétrie de ladite jante 1, et donc un montage du sac sur la jante plus aisé pour l'opérateur qui n'a pas à déterminer sur quel côté de la jante il doit enfiler le jonc 11 du sac 10.

Sur cette même figure, on a également représenté le dispositif 6 d'installation du jonc du sac sur la jante. Ce dispositif 6 est fixe et permet un montage plus facile du jonc sur la jante.

Ce dispositif 6 comprend deux plaques inférieure et supérieure respectivement 7 et 8, parallèles, écartées d'une distance très légèrement supérieure à l'épaisseur de la jante 1. Ainsi, il est possible à l'opérateur d'introduire la jante 1 à l'intérieur du dispositif 6 d'installation, c'est-à-dire entre les deux plaques 7 et 8.

De plus, la plaque 7 inférieure comporte un logement 9 qui permet le passage du sac lorsque la jante 1 est dans le dispositif 6 d'installation.

Selon un mode de réalisation préféré du système, la plaque 8 supérieure est transparente afin de permettre à l'opérateur de visualiser l'opération.

Selon l'exemple décrit, la plaque 8 est réalisée en plexiglas®.

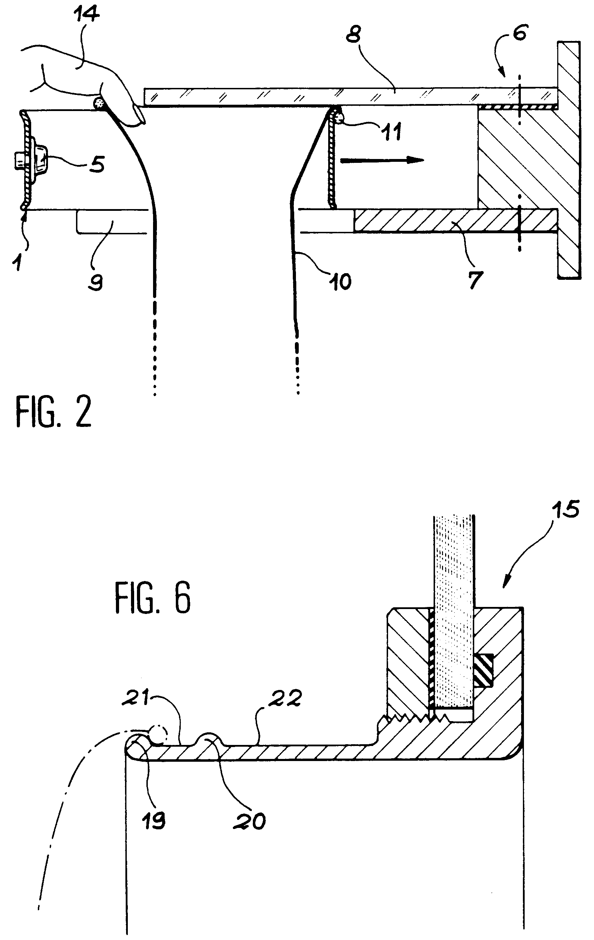

Sur la figure 2, on a représenté l'opération durant laquelle l'opérateur 14 installe le jonc 11 du sac neuf 10 sur la jante 1 grâce au dispositif 6 d'installation. En effet, comme montré au préalable sur la figure 1, l'opérateur 14 a introduit le sac 10 à l'intérieur de la jante 1 et a positionné une partie du jonc 11 à l'extérieur de la jante 1, dans l'un des évasements, par retournement dudit jonc 11.

Afin de ne pas laisser le jonc 11 s'échapper de l'évasement, l'opérateur 14 introduit la partie de la jante 1, autour de laquelle est positionné le jonc 11, entre les plaques 7 et 8 du dispositif 6 d'installation. Il attrape l'autre partie du jonc 11 et allonge l'ouverture du sac 10 pour faire passer peu à peu le jonc 11 à l'extérieur de la jante 1, dans l'évasement. Au fur et à mesure que le jonc 11 se positionne comme souhaité, l'opérateur enfonce la jante 1 dans le dispositif 6 jusqu'à ce que le jonc 11 soit tout entier positionné autour de la jante 1. Lorsque le sac neuf 10 est tendu sur la jante, celle-ci peut être extraite du dispositif 6 d'installation.

Sur la figure 3, on a représenté en traits pleins le rond de gants 15 sur lequel est monté le sac usagé 12 et sur lequel on place la jante 1 munie du sac neuf 10. Sur la paroi externe du rond de gants 15, sont représentées les première et seconde gorges, respectivement référencées 16 et 17.

Dans la première gorge 16, est placée le jonc 13 du sac usagé 12. Afin d'assurer un bon maintien des sacs, le jonc situé dans la première gorge est entouré de ruban adhésif. Aussi, lorsque l'opérateur veut remplacer le sac usagé 12 par un sac neuf 10, il commence par retirer ledit ruban adhésif, qui n'est pas représenté sur la figure.

Lorsque le ruban adhésif a été retiré du contour du jonc 13, l'opérateur amène la jante aux environs du rond de gants 15 (opération représentée en traits mixtes) et place la jante 1, autour de laquelle est placé le jonc 11 du sac neuf 10, sur la partie cylindrique 15a du rond de gants 15. En effet, la jante 1 a un diamètre sensiblement supérieur à celui de la partie cylindrique 15a, ce qui permet un positionnement facile, qui se révèle également précis du fait des butées 5 situées dans la jante 1. Ces butées 5 sont en effet placées à l'intérieur de la jante 1 à une distance telle que son évasement se trouve situé au niveau de la seconde gorge 17. De façon plus précise, l'extrémité de l'évasement est placé à la hauteur du commencement de la gorge 17 si l'on considère que la partie de la gorge 17 la plus proche de la première gorge 16 est son commencement.

Selon un autre mode de réalisation de la jante de montage, une couronne située à l'intérieur de la jante 1 (et non représentée sur la figure) permet également un positionnement précis de la jante 1 sur le rond de gants 15.

Lorsque la jante 1 est ainsi positionnée, l'opérateur peut faire glisser le jonc 11 du sac neuf 10 de l'évasement de la jante 1 (traits pointillés) jusque dans la seconde gorge 17 (représentation en traits pleins). Le confinement des sacs est alors assuré.

L'opérateur peut alors retirer la jante 1 et entourer le jonc 11 de ruban adhésif 18 pour assurer son maintien dans la seconde gorge 17.

L'opérateur retire le sac usagé 12 par l'intérieur de la boîte à gants 15 en tirant sur ledit sac. Cette traction fait sauter le jonc 13 hors de la première gorge 16, ce qui permet de sortir le sac usagé 12 vers l'intérieur de la boîte à gants.

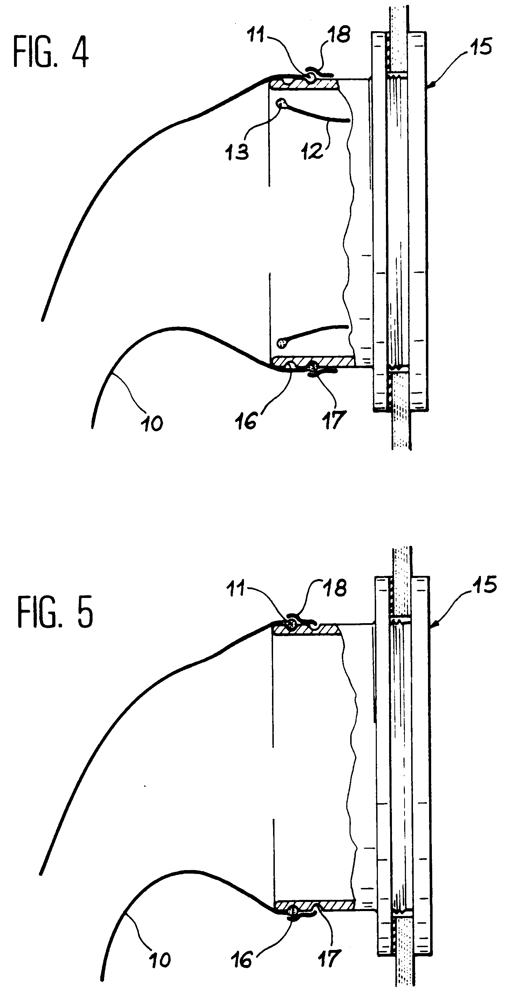

L'opérateur enlève alors le ruban adhésif 18 de dessus le jonc 11 et fait venir ledit jonc de la seconde gorge 17 dans la première gorge 16. Quelques tours de ruban adhésif 18 assurent l'immobilisation du jonc 11 dans la première gorge 16, cette dernière opération étant représentée sur la figure 5.

Sur la figure 6, on a représenté le deuxième mode de réalisation de rond de gants sur lequel les logements sont des bourrelets.

Pour un tel rond de gants à bourrelets, le procédé selon l'invention est appliqué de façon tout à fait similaire. En effet, les premier et second logements ne sont plus réalisés par des gorges, comme sur les figures précédentes, mais par des bourrelets 19 et 20 derrière lesquels les joncs sont retenus. Dans cette sorte de logement, les joncs sont placés dans les cuvettes 21 et 22 situées derrière chacun des bourrelets 19 et 20.

Le système et le procédé selon l'invention peuvent, bien évidemment, être appliqués pour quasiment tous les diamètres de joncs. De plus, la présente invention peut être mise en application aussi bien avec des sacs, que des gants ou tout autre contenant réalisé dans un matériau sensiblement élastique.

## Revendications

1. Système de remplacement d'un contenant usagé (12) monté autour d'un support creux (15) par un contenant neuf (10), ledit support comportant un contour externe comprenant lui-même au moins deux logements (16, 17) assurant la retenue des bords des contenants, lesdits bords des contenants étant fixés autour du support à l'aide de moyens adhésifs (18) de fixation, caractérisé en ce qu'il comporte :
- une jante de montage (1) autour de laquelle est monté provisoirement le bord du contenant neuf et qui est apte à être positionnée autour du support creux pour assurer le transfert du bord du contenant neuf de la jante de montage vers le support creux, et
- un dispositif d'installation (6) pour monter provisoirement le bord dudit contenant sur ladite jante de montage, comprenant une première plaque (7) ayant une échancrure en forme de fer à cheval et une seconde plaque (8), fixée parallèlement à la première plaque et située, par rapport à ladite première plaque, à une distance légèrement supérieure à l'épaisseur de la jante de montage pour permettre l'installation de ladite jante avec le contenant positionné entièrement sur celle-ci entre lesdites plaques.

2. Système selon la revendication 1, caractérisé en ce que la jante de montage comprend au moins trois butées (5) situées sur une paroi interne de ladite jante, ces butées permettant un positionnement précis autour du support (15).

3. Système selon la revendication 1, caractérisé en ce que la jante de montage comprend une couronne située sur une paroi interne de ladite jante pour un positionnement précis autour du support (15).

4. Système selon l'une quelconque des revendications 1 à 3, caractérisé en ce que la première plaque est en matériau transparent pour permettre la visualisation de la jante de montage.

## Claims

1. System for replacing a used container (12), mounted around a hollow support (15), with a new container (10), the said support having an external contour which itself has at least two recesses (16, 17) ensuring the retention of the edges of the containers, the said edges of the containers being fixed around the support with the aid of adhesive securing means (18), characterized in that it comprises:
- a mounting rim (1) around which the edge of the new container is provisionally mounted, and which can be positioned around the hollow support in order to ensure the transfer of the edge of the new container from the mounting rim towards the hollow support, and
- an installation device (6) for provisionally mounting the edge of the said container on the said mounting rim, comprising a first plate (7) having a horseshoe-shaped cutting, and a second plate (8) which is fixed parallel to the first plate and is situated, in relation to the said first plate, at a distance which is slightly greater than the thickness of the mounting rim in order to permit the installation of the said rim, with the container positioned entirely on the latter, between the said plates.

2. System according to Claim 1, characterized in that the mounting rim comprises at least three catches (5) situated on an inner wall of the said rim, these catches permitting a precise positioning around the support (15).

3. System according to Claim 1, characterized in that the mounting rim comprises a collar situated on an inner wall of the said rim for a precise positioning around the support (15).

4. System according to any one of Claims 1 to 3, characterized in that the first plate is made of transparent material in order to permit the mounting rim to be viewed.

## Patentansprüche

1. Auswechselsystem eines um einen hohlen Halter (15) herum angebrachten, gebrauchten Behälters (12) gegen einen neuen Behälter (10), wobei besagter Halter eine Außenkontur aufweist, die selbst wenigstens zwei Sitze (16, 17) umfaßt, die die Zurückhaltung der Ränder der Behälter sicherstellen und besagte Ränder der Behälter um den Halter herum befestigt werden mit Hilfe von haftenden Befestigungseinrichtungen (18),
**dadurch gekennzeichnet,** daß es umfaßt:
- einen Montagering (1), um den herum der Rand des neuen Behälters provisorisch angebracht wird und der um den hohlen Halter herum angeordnet werden kann, um den Übergang des Rands des neuen Behälters vom Montagering zum hohlen Halter zu gewährleisten, und
- eine Anbringungsvorrichtung (6), um den Rand des besagten Behälters provisorisch auf dem genannten Montagering anzubringen, umfassend eine erste Platte (7) mit einem hufeisenförmigen Ausschnitt und eine zweite Platte (8), parallel zur ersten Platte befestigt mit einem Abstand, der etwas größer ist als die Dicke des Montagerings, bezogen auf besagte erste Platte, um die Anbringung dieses Rings zwischen besagten Platten zu ermöglichen, wobei der Behälter ganz auf diesem Ring positioniert ist.

2. System nach Anspruch 1, dadurch gekennzeichnet, daß der Montagering wenigstens drei Anschläge (5) umfaßt, auf einer Innenwand von besagtem Ring befindlich, wobei diese Anschläge eine genaue Positionierung um den Halter (15) herum ermöglichen.

3. System nach Anspruch 1, dadurch gekennzeichnet, daß der Montagering eine Krone bzw. einen Kranz umfaßt, auf einer Innenwand von besagtem Ring befindlich, für eine genaue Positionierung um den Halter (15) herum.

4. System nach einem der Ansprüche 1 bis 3, dadurch gekennzeichnet, daß die erste Platte aus transparentem Material ist, um die Sichtbarmachung des Montagerings zu ermöglichen.
